# EUROPEAN PATENT APPLICATION

(11) **EP 4 742 329 A1**
(43) Date of publication of application: **13.05.2026**
(21) Application number: 25208849.7
(22) Date of filing: 15.10.2025
(51) Int. Cl.: H01M 4/66, H01M 4/04, H01M 10/04, H01M 10/058

(54) **METHOD FOR MANUFACTURING POWER STORAGE CELL, AND POWER STORAGE CELL**

(30) Priority: 11.11.2024 JP 2024196711
(71) Applicant: TOYOTA JIDOSHA KABUSHIKI KAISHA, Toyota-shi, Aichi-ken 471-8571 (JP)
(72) Inventor: OGURA, Masaya, Kosai-shi 431-0422 (JP); SHIMURA, Yosuke, Toyota-shi 471-8571 (JP); NAKASHIMA, Satoshi, Toyota-shi 471-8571 (JP); KAKISHITA, Kenichi, Toyota-shi 471-8571 (JP); CHIHARA, Masashi, Toyota-shi 471-8571 (JP); AWANO, Hiroki, Toyota-shi 471-8571 (JP); SATO, Ryosuke, Kosai-shi 431-0422 (JP); NAGANO, Yasuaki, Kosai-shi 431-0422 (JP)
(74) Representative: Kuhnen & Wacker Patent- und Rechtsanwaltsbüro PartG mbB

(57) **Abstract**

A method for manufacturing a power storage cell (100) includes: a bending step of bending a sheet member (120); and a disposing step of disposing an inner surface (111D) of a bent conductive layer (111) on an insulation support layer (110). The bending step includes: bringing an inner surface (110A) of the insulation support layer (110) into contact with an inner portion (111A); bringing an outer surface (110B) of the insulation support layer (110) into contact with an outer portion (111B); and causing an end portion (110C) of the insulation support layer (110) to face a connecting portion

## Description

### CROSS REFERENCE TO RELATED APPLICATIONS

This nonprovisional application is based on Japanese Patent Application No. 2024-196711 filed on November 11, 2024 with the Japan Patent Office, the entire contents of which are hereby incorporated by reference.

### BACKGROUND

### Field

The present disclosure relates to a method for manufacturing a power storage cell, and a power storage cell.

### Description of the Background Art

Japanese Patent Laying-Open No. 2020-198290 discloses a cell including a composite current collector having an organic support layer and a conductive layer provided on the organic support layer. The above-referenced Japanese Patent Laying-Open No. 2020-198290 discloses an example in which the conductive layer is provided on each of a first surface and a second surface of the organic support layer that are arranged in a thickness direction thereof. The conductive layer provided on each of the first surface and the second surface is illustrated as being formed by physical vapor deposition (such as evaporation or sputtering).

### SUMMARY

In the above-referenced Japanese Patent Laying-Open No. 2020-198290, the conductive layer (an electrode foil) is formed on each of the first surface and the second surface of the organic support layer (an insulation support layer) by physical vapor deposition, as described above. When forming a conductive layer by physical vapor deposition, it requires a relatively long time to grow the conductive layer, which may result in a longer time to manufacture an electrode sheet. Thus, it is desired to efficiently manufacture an electrode sheet having an electrode foil formed on both surfaces of an insulation support layer.

The present disclosure has been made to solve the above-described problem, and an object of the present disclosure is to provide a method for manufacturing a power storage cell, and a power storage cell, that allow for efficient manufacture of an electrode sheet having an electrode foil provided on both surfaces of an insulation support layer.

A method for manufacturing a power storage cell including an electrode sheet according to a first aspect of the present disclosure includes: a forming step of forming a sheet member including an electrode foil and an active material layer, the electrode foil including a first main surface and a second main surface, the active material layer being formed on the first main surface; a bending step of bending the sheet member; and a disposing step of disposing the second main surface of the bent electrode foil on an insulation support layer. The bending step includes bending the sheet member to thereby form, in the electrode foil, a first portion, a second portion arranged with the first portion in a thickness direction of the insulation support layer, and a connecting portion that connects the first portion to the second portion. Assuming that a direction intersecting the thickness direction is defined as an intersecting direction, one of the bending step and the disposing step includes (i) bringing a first surface of the insulation support layer provided at one end of the insulation support layer in the thickness direction into contact with the first portion, (ii) bringing a second surface of the insulation support layer opposite to the first surface into contact with the second portion, and (iii) causing an end portion of the insulation support layer in the intersecting direction to face the connecting portion in the intersecting direction, to thereby form the electrode sheet.

A power storage cell according to a second aspect of the present disclosure includes: a current collector plate; and an electrode body including an electrode sheet connected to the current collector plate. The electrode sheet includes an insulation support layer, an electrode foil, and an active material layer formed on the electrode foil. The active material layer is disposed opposite to the insulation support layer with respect to the electrode foil. The electrode foil has a first portion and a second portion arranged in a thickness direction of the insulation support layer, and a connecting portion that connects the first portion to the second portion. The first portion is disposed on a first surface of the insulation support layer provided at one end of the insulation support layer in the thickness direction. The second portion is disposed on a second surface of the insulation support layer opposite to the first surface. Assuming that a direction intersecting the thickness direction is defined as an intersecting direction, the connecting portion faces an end portion of the insulation support layer on a first direction side in the intersecting direction with a gap therebetween in the intersecting direction.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 shows a configuration of a vehicle having a power storage device mounted thereon.
Fig. 2 is a perspective view showing configurations of the power storage device and a frame member.
Fig. 3 is a cross-sectional view taken along line III-III in Fig. 2.
Fig. 4 is a perspective view showing a configuration of a power storage cell.
Fig. 5 is an exploded perspective view showing the configuration of the power storage cell.
Fig. 6 is a cross-sectional view as seen in the direction of arrows VI-VI in Fig. 4.
Fig. 7 is a cross-sectional view as seen in the direction of arrows VII-VII in Fig. 6.
Fig. 8 is a partially enlarged cross-sectional view showing a configuration of a first electrode.
Fig. 9 is a partially enlarged cross-sectional view showing a configuration of a second electrode.
Fig. 10 is a flow diagram showing a method for manufacturing the power storage cell.
Fig. 11 is a flow diagram showing details of a step of forming the first electrode.
Fig. 12 shows details of S11 in Fig. 11.
Fig. 13 is a cross-sectional view as seen in the direction of arrows XIII-XIII in Fig. 12.
Fig. 14 shows details of S12 in Fig. 11.
Fig. 15 shows details of S13 in Fig. 11.
Fig. 16 shows details of S14 in Fig. 11.
Fig. 17 shows details of S15 in Fig. 11.
Fig. 18 shows details of S16 in Fig. 11.
Fig. 19 is a plan view showing holes formed in a first active material layer according to a modification of one embodiment.
Fig. 20 is a cross-sectional view as seen in the direction of arrows XX-XX in Fig. 19.
Fig. 21 is a cross-sectional view showing an uncoated portion of the first active material layer according to a modification of one embodiment.
Fig. 22 is a cross-sectional view showing an insulating layer formed on the uncoated portion of the first active material layer according to a modification of one embodiment.
Fig. 23 is a cross-sectional view showing a configuration of the first electrode according to a modification of one embodiment.

### DESCRIPTION OF THE PREFERRED EMBODIMENTS

An embodiment of the present disclosure will be described with reference to the drawings. In the drawings referenced below, the same or corresponding members are designated by the same numerals.

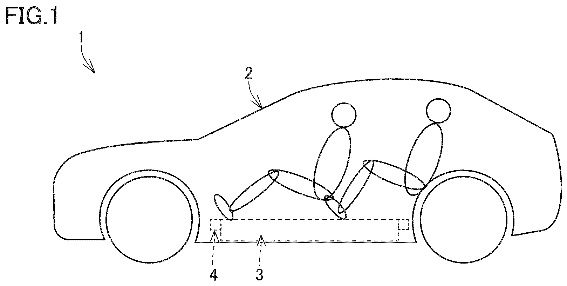

Fig. 1 schematically shows a vehicle including a power storage device in the present embodiment. As shown in Fig. 1, a vehicle 1 includes a vehicle body 2 and a power storage device 3. Examples of vehicle 1 include a hybrid electric vehicle, a plug-in hybrid electric vehicle, and a battery electric vehicle. Power storage device 3 may be provided in an electrical device (e.g., a stationary power storage device) other than an electrically powered vehicle. As used herein, an X direction, a Y direction, and a Z direction are directions orthogonal to one another. For example, the X direction and the Y direction may be the front-rear direction and the right-left direction, respectively, when power storage device 3 is mounted on an electrically powered vehicle. The Z direction may be the up-down direction. Specifically, a Z1 direction and a Z2 direction may be upward and downward, respectively.

Vehicle body 2 includes a frame member 4. Frame member 4 is disposed at the bottom of vehicle body 2. Frame member 4 is formed in a substantially quadrangular tubular shape that surrounds power storage device 3. Power storage device 3 is attached to frame member 4.

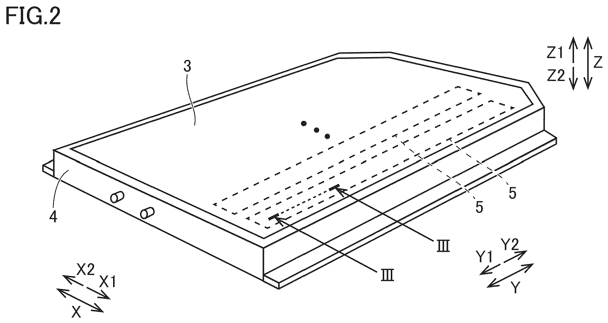

Fig. 2 is a perspective view schematically showing power storage device 3 and frame member 4. As shown in Fig. 2, power storage device 3 includes a plurality of power storage stacks 5.

Each power storage stack 5 is formed in a rectangular parallelepiped shape elongated in the Y direction. The plurality of power storage stacks 5 are disposed side by side along the X direction.

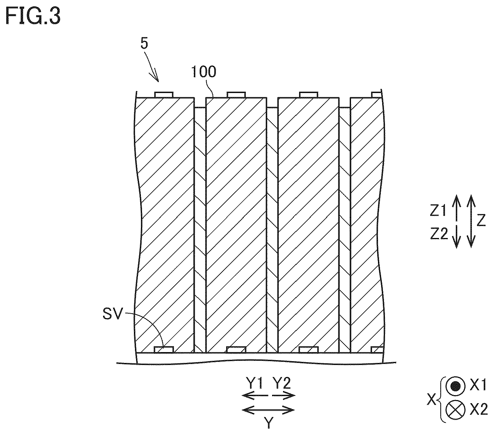

Fig. 3 is a cross-sectional view as seen in the direction of arrows III-III in Fig. 2 (a cross-sectional view of power storage stack 5). Each power storage stack 5 includes a plurality of power storage cells 100 arranged in the Y direction. A pressure release valve SV is formed at the bottom of each power storage cell 100.

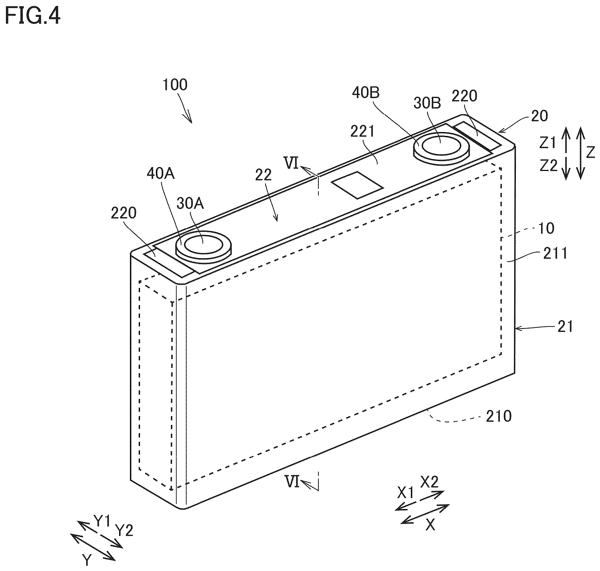

Fig. 4 is a perspective view showing power storage cell 100 according to the present embodiment. As shown in Fig. 4, power storage cell 100 is a so-called prismatic battery. Power storage cell 100 is a secondary battery configured to be chargeable and dischargeable. Power storage cell 100 may be a secondary battery such as a lithium-ion battery or a nickel-metal hydride battery. Power storage cell 100 may be used, for example, as a cell included in a power storage module mounted on an electrically powered vehicle.

Power storage cell 100 includes an electrode body 10, a case 20, a first external terminal 30A, a second external terminal 30B, a first terminal support portion 40A, and a second terminal support portion 40B. Note that electrode body 10 is schematically shown in Fig. 4.

Case 20 is electrically conductive. An electrically conductive portion of case 20 is made of metal such as aluminum. Case 20 contains electrode body 10. Case 20 also contains an electrolyte solution (not shown).

Case 20 includes a case body 21 and a lid 22. Case body 21 includes a bottom wall 210 and a peripheral wall 211 extending upward from bottom wall 210. Pressure release valve SV (Fig. 3) is formed on bottom wall 210.

Lid 22 includes a lid body 220 and an insulating cover 221. Lid body 220 is joined to peripheral wall 211 by welding or the like so as to close an opening in peripheral wall 211.

First external terminal 30A and second external terminal 30B are provided so as to be exposed to the outside in power storage cell 100. In the present embodiment, first external terminal 30A is the positive terminal and second external terminal 30B is the negative terminal. First external terminal 30A and second external terminal 30B are arranged in the X direction.

First terminal support portion 40A is engaged with lid body 220. First terminal support portion 40A supports first external terminal 30A from the outer peripheral side of first external terminal 30A. Second terminal support portion 40B is engaged with lid body 220. Second terminal support portion 40B supports second external terminal 30B from the outer peripheral side of second external terminal 30B.

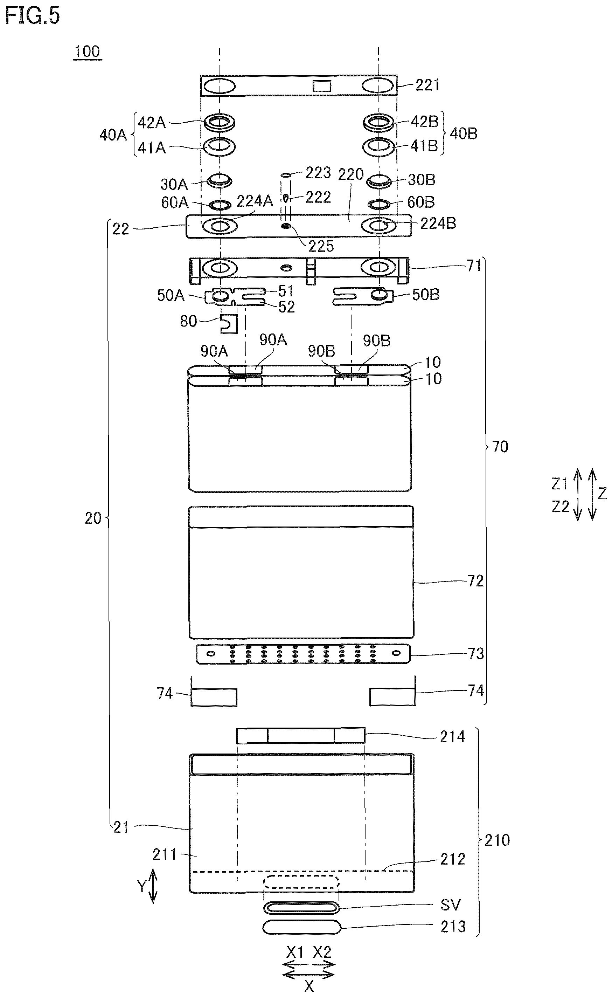

Fig. 5 is an exploded perspective view of power storage cell 100 according to the present embodiment. Power storage cell 100 further includes a first coupling member 50A, a second coupling member 50B, a first seal ring 60A, a second seal ring 60B, an insulating member 70, and a fuse protective portion 80. First coupling member 50A is one example of "current collector plate" of the present disclosure.

Bottom wall 210 includes a bottom body 212, an outer protective film 213, and an inner protective film 214. Peripheral wall 211 extends upward from bottom body 212. Pressure release valve SV is provided on bottom body 212. Outer protective film 213 covers pressure release valve SV from the outside. Inner protective film 214 covers pressure release valve SV from the inside. Bottom body 212 and pressure release valve SV are made of metal such as aluminum.

An opening is formed at the top of peripheral wall 211. Peripheral wall 211 has a substantially rectangular outline when viewed from an opening direction of the opening. The opening and bottom wall 210 are arranged in the Z direction. The opening is disposed on the Z1 side of bottom wall 210. The Z direction may be the height direction or the up-down direction of power storage cell 100. Peripheral wall 211 is made of metal such as aluminum.

Lid 22 further includes a sealing plug 222 and a plug cover 223. Lid body 220 is provided with a first coupling hole 224A, a second coupling hole 224B, and an injection hole 225. Injection hole 225 is a through hole through which to inject the electrolyte solution into case body 21 in a manufacturing process of power storage cell 100.

Sealing plug 222 seals injection hole 225. Plug cover 223 covers injection hole 225 and sealing plug 222. Insulating cover 221 covers injection hole 225, sealing plug 222, and plug cover 223.

First coupling member 50A and second coupling member 50B are electrically conductive. First coupling member 50A and second coupling member 50B are at least partially disposed in case 20. Each of first coupling member 50A and second coupling member 50B is disposed at a position facing electrode body 10 in the Z direction.

First external terminal 30A or first coupling member 50A is inserted into first coupling hole 224A. First external terminal 30A and first coupling member 50A are joined to each other. First coupling member 50A is joined to electrode body 10. First external terminal 30A is thus electrically connected to electrode body 10.

Second external terminal 30B or second coupling member 50B is inserted into second coupling hole 224B. Second external terminal 30B and second coupling member 50B are joined to each other. Second coupling member 50B is joined to electrode body 10. Second external terminal 30B is thus electrically connected to electrode body 10.

First seal ring 60A is provided along first coupling hole 224A. First seal ring 60A is provided in a gap between lid body 220 and first external terminal 30A, and seals this gap. Second seal ring 60B is provided along second coupling hole 224B. Second seal ring 60B is provided in a gap between lid body 220 and second external terminal 30B, and seals this gap. First seal ring 60A and second seal ring 60B are electrically insulating.

First terminal support portion 40A includes a first engagement ring 41A and a first cover ring 42A. First engagement ring 41A extends annularly around first coupling hole 224A, and is directly engaged with lid body 220. First cover ring 42A covers first engagement ring 41A. First engagement ring 41A supports first external terminal 30A with first cover ring 42A interposed therebetween. First cover ring 42A is formed of an electrically insulating or relatively weakly electrically conductive resin member.

Second terminal support portion 40B includes a second engagement ring 41B and a second cover ring 42B. Second engagement ring 41B extends annularly around second coupling hole 224B, and is directly engaged with lid body 220. Second cover ring 42B covers second engagement ring 41B. Second engagement ring 41B supports second external terminal 30B with second cover ring 42B interposed therebetween. Second cover ring 42B is formed of an electrically insulating resin member.

Insulating member 70 is electrically insulating. Insulating member 70 is disposed between electrode body 10 and case 20. Insulating member 70 provides electrical insulation between electrode body 10 and case 20. Insulating member 70 includes an insulating bracket 71, a peripheral surface insulating portion 72, a bottom surface insulating portion 73, and an adhesive tape 74.

Insulating bracket 71 is disposed between electrode body 10 and lid body 220. Insulating bracket 71 has relatively high rigidity, and is in contact with both electrode body 10 and lid body 220. Electrode body 10 is thus fixed to case 20 in the Z direction.

Peripheral surface insulating portion 72 is disposed between electrode body 10 and peripheral wall 211. Electrode body 10 is formed of a film-like member.

Bottom surface insulating portion 73 is disposed between electrode body 10 and bottom wall 210. Bottom surface insulating portion 73 is formed of a film-like member. Bottom surface insulating portion 73 is fixed (bonded) to case 20 (bottom wall 210) with adhesive tape 74.

As shown in Fig. 5, power storage cell 100 according to the present embodiment includes a plurality of electrode bodies 10. Power storage cell 100 of the present embodiment includes two electrode bodies 10. These electrode bodies 10 are arranged in the Y direction. Peripheral surface insulating portion 72 may collectively cover the plurality of electrode bodies 10 so as to fix these electrode bodies 10 to each other.

Each of the plurality of electrode bodies 10 is provided with at least one first tab 90A and at least one second tab 90B. In the present embodiment, each of the plurality of electrode bodies 10 is provided with a plurality of first tabs 90A and a plurality of second tabs 90B. Each first tab 90A electrically connects a first electrode 10A which will be described later to first coupling member 50A. Each second tab 90B electrically connects a second electrode 10B which will be described later to second coupling member 50B.

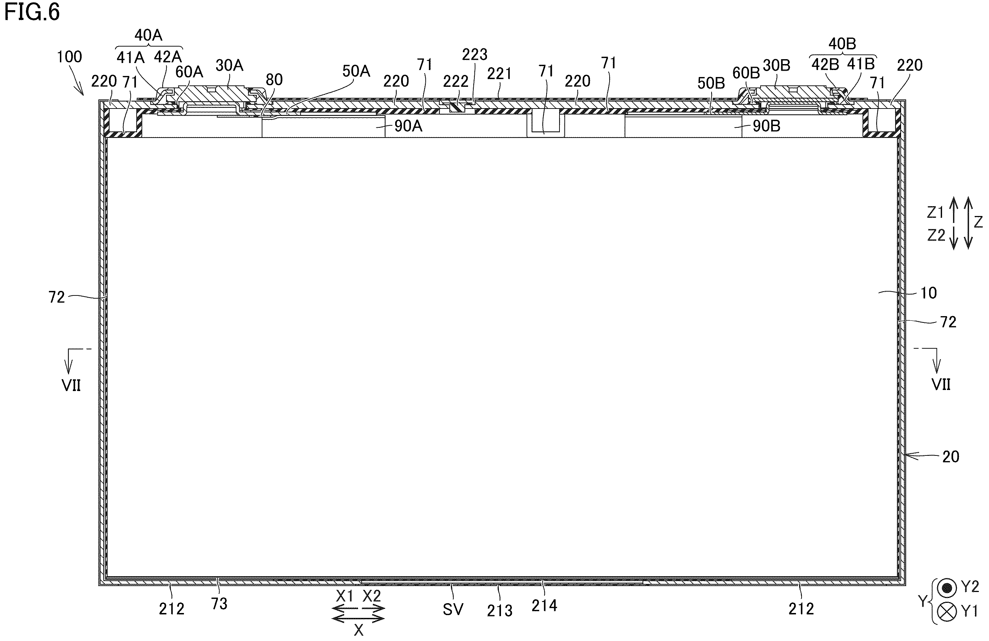

Fig. 6 is a cross-sectional view as seen in the direction of arrows VI-VI in Fig. 4. As shown in Fig. 6, the plurality of first tabs 90A are disposed side by side in the Y direction. The plurality of first tabs 90A are joined to one another by, for example, ultrasonic welding. The plurality of first tabs 90A are jointed to first coupling member 50A by, for example, ultrasonic welding. The plurality of second tabs 90B are disposed side by side in the Y direction. The plurality of second tabs 90B are joined to one another by, for example, ultrasonic welding. The plurality of second tabs 90B are jointed to second coupling member 50B by, for example, ultrasonic welding.

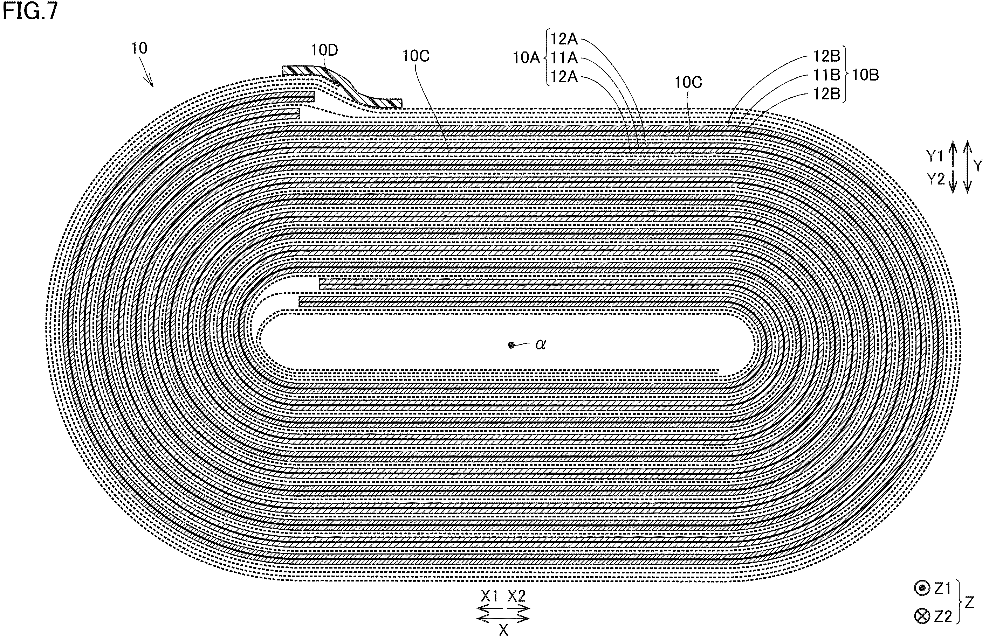

Fig. 7 is a cross-sectional view of the electrode body in Fig. 6 as seen in the direction of arrows VII-VII. Electrode body 10 includes first electrode 10A, second electrode 10B, a separator 10C, and a tape member 10D. In electrode body 10, first electrode 10A, second electrode 10B and separator 10C are wound about a winding axis α. As described above, electrode body 10 is a so-called wound electrode body in the present embodiment. However, electrode body 10 may be a stacked electrode body in which first electrode 10A, second electrode 10B and separator 10C are stacked in one direction (e.g., in the Y direction). First electrode 10A is one example of "electrode sheet" of the present disclosure.

First electrode 10A and second electrode 10B each have a sheet-like outline. Electrode body 10 is constituted of a group of polar plates in which first electrode 10A and second electrode 10B are wound with one or more separators 10C interposed therebetween.

In the present embodiment, first electrode 10A is the positive electrode and second electrode 10B is the negative electrode. However, first electrode 10A may be the negative electrode and second electrode 10B may be the positive electrode.

Separator 10C is provided between first electrode 10A and second electrode 10B. Separator 10C separates first electrode 10A from second electrode 10B while allowing movement of ions between first electrode 10A and second electrode 10B. The ions are, for example, lithium ions. Separator 10C is electrically insulating.

Of first electrode 10A, second electrode 10B, and separator 10C, separator 10C is located on the innermost side about winding axis α. Of first electrode 10A, second electrode 10B, and separator 10C, separator 10C is located on the outermost side about winding axis α. The outer peripheral edge of separator 10C in the winding direction is fixed with tape member 10D disposed on the outer peripheral surface of separator 10C.

First electrode 10A includes a first current collector 11A and a first active material layer 12A. Second electrode 10B includes a second current collector 11B and a second active material layer 12B.

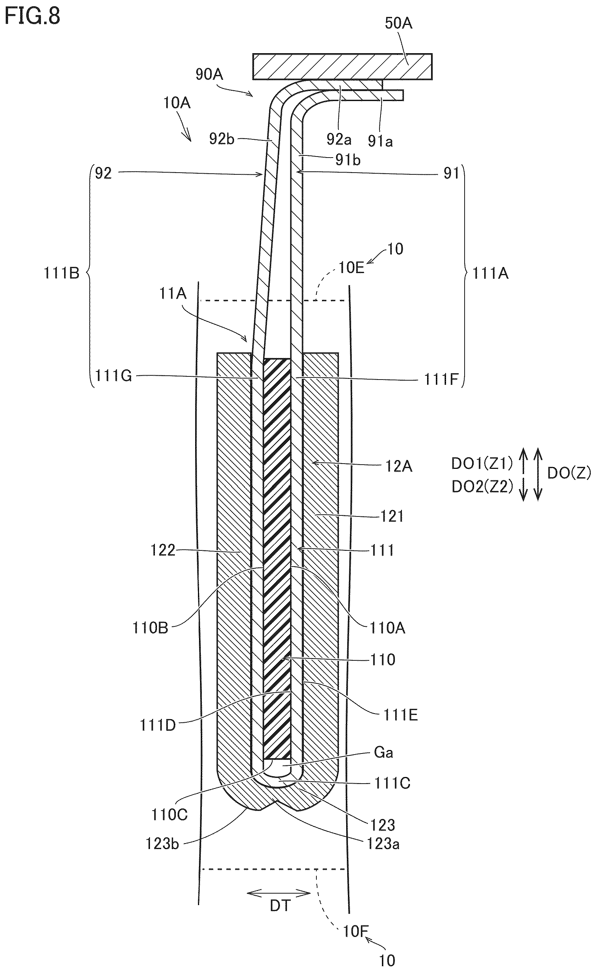

Fig. 8 is a cross-sectional view of first electrode 10A. First current collector 11A includes an insulation support layer 110 and a conductive layer 111. Conductive layer 111 is one example of "electrode foil" of the present disclosure.

Insulation support layer 110 is made of an electrically insulating resin composite. For example, insulation support layer 110 is made of a resin composite including polyester-based resin. The polyester-based resin is preferably polyethylene terephthalate, for example. Accordingly, the rigidity of first current collector 11A can be increased while the electrically insulating property of insulation support layer 110 is maintained. Insulation support layer 110 can in turn be made relatively thin. An orthogonal direction DO orthogonal to a thickness direction DT of insulation support layer 110 is substantially parallel to the Z direction. Thickness direction DT and orthogonal direction DO are examples of "thickness direction" and "intersecting direction" of the present disclosure, respectively.

Conductive layer 111 is formed of a metal layer. In the present embodiment, conductive layer 111 is made of metal including aluminum. Accordingly, first current collector 11A can be suitably used as a positive current collector. First current collector 11A may be a negative current collector, and conductive layer 111 may be made of metal including copper.

Here, it is desired to efficiently manufacture an electrode having a conductive layer formed on both surfaces of an insulation support layer.

In the present embodiment, therefore, conductive layer 111 has an inner portion 111A and an outer portion 111B arranged in thickness direction DT, and a connecting portion 111C that connects inner portion 111A to outer portion 111B. Inner portion 111A, outer portion 111B, and connecting portion 111C are formed by bending conductive layer 111 in a U-shape. Conductive layer 111 is a single member including at least one bent portion. That is, connecting portion 111C is formed integrally with each of inner portion 111A and outer portion 111B. Inner portion 111A is located closer to winding axis α (Fig. 7) than outer portion 111B in a state where first electrode 10A has been wound. Inner portion 111A and outer portion 111B are examples of "first portion" and "second portion" of the present disclosure, respectively.

Connecting portion 111C has a curved shape by being bent. Connecting portion 111C is bent so as to project downward (in a DO2 direction). Connecting portion 111C is one example of "bent portion" of the present disclosure.

Inner portion 111A is disposed on an inner surface 110A of insulation support layer 110 provided at one end of insulation support layer 110 in thickness direction DT. Outer portion 111B is disposed on an outer surface 110B of insulation support layer 110 opposite to inner surface 110A. Outer surface 110B is provided at the other end of insulation support layer 110 in thickness direction DT. Connecting portion 111C faces, in orthogonal direction DO, end portion 110C of insulation support layer 110 on the first direction side (on the DO2 direction side) in orthogonal direction DO. The DO2 direction is the same direction as the Z2 direction (a direction toward the back in the plane of the drawing of Fig. 7). Inner surface 110A and outer surface 110B are examples of "first surface" and "second surface" of the present disclosure, respectively.

Accordingly, the conductive layer can be disposed on each of inner surface 110A and outer surface 110B merely by bending conductive layer 111. As a result, first electrode 10A can be readily and efficiently manufactured.

Conductive layer 111 includes an inner surface 111D and an outer surface 111E. Inner surface 111D is in contact with (faces) insulation support layer 110. Outer surface 111E is the backside of inner surface 111D. That is, outer surface 111E is provided opposite to insulation support layer 110. First active material layer 12A coats outer surface 111E. First active material layer 12A is provided on each of inner portion 111A, outer portion 111B, and connecting portion 111C. Inner surface 111D is one example of "second main surface" of the present disclosure. Outer surface 111E is one example of "electrode surface" and "first main surface" of the present disclosure.

First active material layer 12A includes an inner active material portion 121, an outer active material portion 122, and a connecting active material portion 123. Inner active material portion 121 coats inner portion 111A of conductive layer 111. Outer active material portion 122 coats outer portion 111B of conductive layer 111. Connecting active material portion 123 coats connecting portion 111C of conductive layer 111. Connecting active material portion 123 connects inner active material portion 121 to outer active material portion 122. Inner active material portion 121 and outer active material portion 122 are examples of "first active material portion" and "second active material portion" of the present disclosure, respectively. Connecting active material portion 123 is one example of "bent portion coating portion" of the present disclosure.

Inner portion 111A is constituted of an inner coated portion 111F and an inner tab portion 91. Inner coated portion 111F is a portion of inner portion 111A that is coated with first active material layer 12A (inner active material portion 121). Inner tab portion 91 is a portion of inner portion 111A that is not coated with first active material layer 12A (inner active material portion 121). Inner tab portion 91 is formed integrally with inner coated portion 111F. Inner tab portion 91 and first active material layer 12A are examples of "first protruding portion" and "active material layer" of the present disclosure, respectively.

Inner tab portion 91 protrudes further toward the DO1 direction than inner active material portion 121 in orthogonal direction DO. Specifically, inner tab portion 91 extends toward the DO1 direction from a DO1 direction side-end of inner coated portion 111F. The DO1 direction is opposite to the DO2 direction. Inner tab portion 91 protrudes upward (in the DO1 direction) from an upper end portion 10E of electrode body 10. Upper end portion 10E is the upper end portion of separator 10C (Fig. 7). The DO1 direction is one example of "second direction" of the present disclosure.

Outer portion 111B is constituted of an outer coated portion 111G and an outer tab portion 92. Outer coated portion 111G is a portion of outer portion 111B that is coated with first active material layer 12A (outer active material portion 122). Outer tab portion 92 is a portion of outer portion 111B that is not coated with first active material layer 12A (outer active material portion 122). Outer tab portion 92 is formed integrally with outer coated portion 111G. Outer tab portion 92 is one example of "second protruding portion" of the present disclosure.

Outer tab portion 92 protrudes further toward the DO1 direction than outer active material portion 122 in orthogonal direction DO. Specifically, outer tab portion 92 extends toward the DO1 direction from a DO1 direction side-end of outer coated portion 111G. Outer tab portion 92 protrudes upward (in the DO1 direction) from upper end portion 10E of electrode body 10.

Each of inner tab portion 91 and outer tab portion 92 is connected to first coupling member 50A. Accordingly, the number of components of first electrode 10A can be reduced and the configuration of first electrode 10A can be simplified as compared to when conductive layer 111 and first coupling member 50A are electrically connected to each other by a different member from conductive layer 111. Inner tab portion 91 and outer tab portion 92 constitute first tab 90A.

Specifically, inner tab portion 91 has an adjacent portion 91a and a coupling portion 91b. Adjacent portion 91a is adjacent to first coupling member 50A and extends along first coupling member 50A. Adjacent portion 91a may extend along thickness direction DT, for example. Adjacent portion 91a is joined to first coupling member 50A. Coupling portion 91b connects adjacent portion 91a to inner coated portion 111F. Coupling portion 91b may extend along orthogonal direction DO, for example. That adjacent portion 91a is joined to first coupling member 50A also includes adjacent portion 91a being indirectly joined to first coupling member 50A with an adjacent portion 92a (described later) interposed therebetween.

Outer tab portion 92 has adjacent portion 92a and a coupling portion 92b. Adjacent portion 92a is adjacent to first coupling member 50A and extends along first coupling member 50A. Adjacent portion 92a may extend along thickness direction DT, for example. Adjacent portion 92a is joined to first coupling member 50A. Coupling portion 92b connects adjacent portion 92a to outer coated portion 111G. Coupling portion 92b may extend along orthogonal direction DO, for example. That adjacent portion 92a is joined to first coupling member 50A also includes adjacent portion 92a being indirectly joined to first coupling member 50A with adjacent portion 91a interposed therebetween.

Although adjacent portion 91a and adjacent portion 92a are schematically shown as overlapping each other in the example of Fig. 8, adjacent portion 91a and adjacent portion 92a may be displaced from each other, for example, so that each of adjacent portion 91a and adjacent portion 92a is in direct contact with first coupling member 50A.

Although each of inner tab portion 91 and outer tab portion 92 extends to first coupling member 50A in the example of Fig. 8, only one of inner tab portion 91 and outer tab portion 92 may extend to first coupling member 50A. For example, the upper end portion of outer tab portion 92 may be joined to coupling portion 91b of inner tab 91.

The lower end portion of first electrode 10A (the lower end portion of connecting active material portion 123) is located above a lower end portion 10F of electrode body 10. Lower end portion 10F is the lower end portion of separator 10C (Fig. 7).

A gap Ga is formed between end portion 110C of insulation support layer 110 and connecting portion 111C of conductive layer 111. The size of gap Ga may be set based on, for example, a pressure applied to insulation support layer 110 in the manufacturing process of power storage cell 100. Specifically, the size of gap Ga may be set based on the amount by which insulation support layer 110 extends in orthogonal direction DO due to the pressure.

Accordingly, even when insulation support layer 110 extends due to the pressure, gap Ga can be used as a space for accommodating (releasing) the extending portion of insulation support layer 110. In addition, when the cell temperature rises due to charging and discharging of power storage cell 100, causing insulation support layer 110 to extend and deform, gap Ga can ensure a space for the extension of insulation support layer 110, to suppress the occurrence of adverse effects such as flection of insulation support layer 110.

A notch 123a is formed in connecting active material portion 123. Connecting active material portion 123 includes an outer surface 123b provided opposite to conductive layer 111. Outer surface 123b is curved so as to project downward (in the DO2 direction). Notch 123a is formed in outer surface 123b. Outer surface 123b is one example of "active material surface" of the present disclosure.

Accordingly, conductive layer 111 having first active material layer 12A disposed thereon can be bent using notch 123a as a starting point, so that the step of bending conductive layer 111 can be facilitated. In addition, first active material layer 12A is bent around notch 123a, so that removal of the bent portion of first active material layer 12A can be suppressed as compared to when notch 123a is not formed.

Notch 123a may be formed in the lower end portion (a portion closest to the DO2 side) of first active material layer 12A. Notch 123a may be formed at a central position between the position of inner active material portion 121 and the position of outer active material portion 122 in thickness direction DT. Conductive layer 111 is not exposed and is covered with first active material layer 12A even at the portion where notch 123a is formed.

Separator 10C (Fig. 7) is stacked on first active material layer 12A in a radial direction about winding axis α (Fig. 7). Separator 10C is stacked on inner active material portion 121 in the radial direction. Separator 10C is also stacked on outer active material portion 122 in the radial direction.

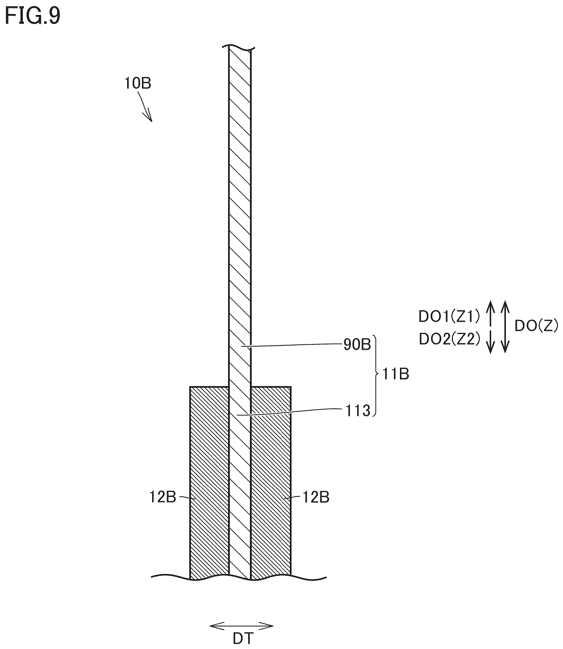

Fig. 9 is a cross-sectional view of second electrode 10B. Second electrode 10B is stacked on first active material layer 12A (Figs. 7 and 8) with separator 10C (Fig. 7) interposed therebetween in the radial direction. More specifically, second electrode 10B is stacked on inner active material portion 121 (Fig. 8) with separator 10C interposed therebetween, and is also stacked on outer active material portion 122 (Fig. 8) with separator 10C interposed therebetween, in the radial direction.

Second electrode 10B includes second current collector 11B and second active material layer 12B. Second current collector 11B includes a conductive support portion 113 and the plurality of second tabs 90B. Conductive support portion 113 extends along orthogonal direction DO (Z direction). The plurality of second tabs 90B extend from the upper end of conductive support portion 113. The plurality of second tabs 90B are joined to one another and to second coupling member 50B by ultrasonic welding (Figs. 5 and 6).

The plurality of second tabs 90B and conductive support portion 113 are formed of an integral member, for example, a metal foil. In the present embodiment, the plurality of second tabs 90B and conductive support portion 113 are made of, for example, metal including copper. Accordingly, second current collector 11B can be suitably used as a negative current collector. In the case where first current collector 11A is a negative current collector, the plurality of second tabs 90B and conductive support portion 113 may be made of metal including aluminum.

Second active material layer 12B is stacked on both surfaces of conductive support portion 113 of second current collector 11B. In the present embodiment, since second electrode 10B is the negative electrode, the DO1-side edge of second active material layer 12B is located on the DO1 side relative to the DO1-side edge of first active material layer 12A. The DO2-side edge of second active material layer 12B is located on the DO2 side relative to the DO2-side edge of first active material layer 12A.

### (Method for Manufacturing Power Storage Cell)

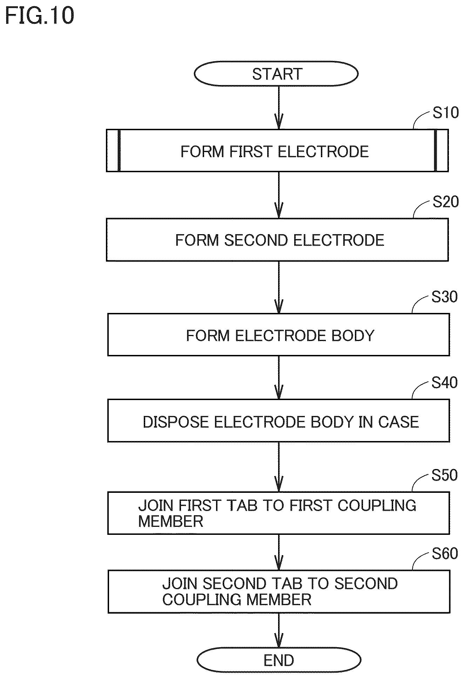

Next, a method for manufacturing power storage cell 100 of the present disclosure will be described with reference to Figs. 10 to 18.

Fig. 10 shows a schematic manufacturing flow of the method for manufacturing power storage cell 100. In step S10, first electrode 10A is formed. Next, in step S20, second electrode 10B is formed. The order of step S10 and step S20 is not limited to the exemplary order described above.

Next, in step S30, a sheet member having separator 10C (Fig. 7) sandwiched between first electrode 10A formed in step S10 and second electrode 10B formed in step S20 is wound to thereby form electrode body 10.

In step S40, two electrode bodies 10 formed in step S30 are disposed in case 20 (Fig. 4).

In step S50, first tab 90A (adjacent portions 91a and 92a) (Fig. 8) and first coupling member 50A are joined to each other. For example, first tab 90A and first coupling member 50A may be joined to each other by ultrasonic joining.

In step S60, second tab 90B and second coupling member 50B are joined to each other. For example, second tab 90B and second coupling member 50B may be joined to each other by ultrasonic joining. The order of step S50 and step S60 is not limited to the exemplary order described above.

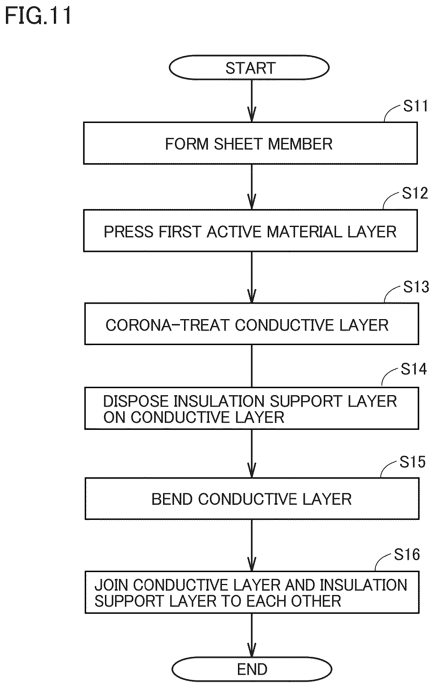

Fig. 11 shows a detailed manufacturing flow of step S10 in Fig. 10. Step S10 includes steps S11 to S16.

In step S11, a sheet member 120 constituting first electrode 10A is formed. In step S12, first active material layer 12A coating conductive layer 111 is pressed and thus compacted. In step S13, the surface of conductive layer 111 is corona-treated. The surface of insulation support layer 110 may be corona-treated. Steps S11 and S12 are an example of "forming step" of the present disclosure.

In step S14, insulation support layer 110 is disposed on conductive layer 111. In step S15, conductive layer 111 (sheet member 120) is bent. In step S16, conductive layer 111 and insulation support layer 110 are joined to each other.

As described above, the step of disposing insulation support layer 110 on conductive layer 111 (S14) is performed after the step of pressing first active material layer 12A (S12). Accordingly, deformation of insulation support layer 110 by being crushed (stretched) in the pressing step can be suppressed.

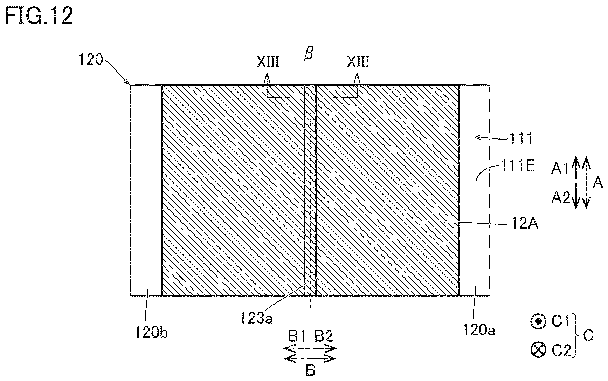

Fig. 12 shows step S11 in Fig. 11. In Fig. 12, a direction orthogonal to an A direction in which a bend line β of conductive layer 111 (sheet member 120) extends is defined as a B direction. A direction orthogonal to each of the A direction and the B direction is defined as a C direction. In Fig. 12, first active material layer 12A is indicated by hatching.

In step S11, outer surface 111E (the C1-side surface) of conductive layer 111 is coated with first active material layer 12A. First active material layer 12A extends to each of the B1 side and the B2 side from bend line β. In other words, first active material layer 12A extends across bend line β in the B direction. First active material layer 12A and conductive layer 111 form sheet member 120 constituting first electrode 10A (Fig. 8).

At this time, an uncoated portion 120a and an uncoated portion 120b not coated with first active material layer 12A are formed on outer surface 111E of conductive layer 111. Uncoated portion 120a is formed at a B2-side end portion of outer surface 111E. Uncoated portion 120b is formed at a B1-side end portion of outer surface 111E. Uncoated portion 120a and uncoated portion 120b constitute inner tab portion 91 (Fig. 8) and outer tab portion 92 (Fig. 8), respectively, upon bending of sheet member 120.

In step S11, notch 123a is also formed. Notch 123a extends in the A direction along bend line β. That is, a groove extending in the A direction is formed by notch 123a. Notch 123a may be formed by, for example, laser or cutting.

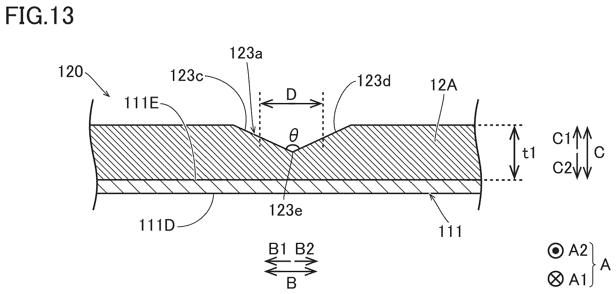

Fig. 13 is a cross-sectional view as seen in the direction of arrows XIII-XIII in Fig. 12. As shown in Fig. 13, notch 123a is formed by a first inclined surface 123c and a second inclined surface 123d facing each other in the B direction. First inclined surface 123c is inclined toward conductive layer 111 (toward C2) as first inclined surface 123c is closer to the B2 side (to the second inclined surface 123d side). Second inclined surface 123d is inclined toward conductive layer 111 (toward C2) as second inclined surface 123d is closer to the B1 side (to the first inclined surface 123c side). First inclined surface 123c and second inclined surface 123d are connected to each other at a lower end portion 123e of notch 123a.

A distance D between first inclined surface 123c and second inclined surface 123d decreases toward conductive layer 111 (toward C2). Distance D linearly decreases toward conductive layer 111. An angle θ formed between first inclined surface 123c and second inclined surface 123d is preferably 90 degrees or more (e.g., 120 degrees). First active material layer 12A immediately after step S11 has a thickness t1 in the C direction.

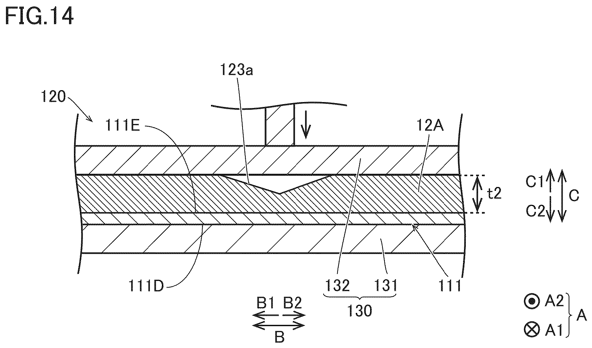

Fig. 14 shows details of step S12 in Fig. 11. First active material layer 12A is pressed in the C direction by a pressing apparatus 130. Specifically, pressing apparatus 130 includes a support table 131 and a pressing portion 132. Support table 131 supports sheet member 120 from the C2 side. Pressing portion 132 presses sheet member 120 supported by support table 131 from the C1 side. By being pressed by pressing apparatus 130, first active material layer 12A is reduced in thickness in the C direction from thickness t1 (Fig. 13) to a thickness t2. The C1 direction and the C2 direction may be upward and downward, respectively.

In step S12, since the pressing is performed without insulation support layer 110 disposed on sheet member 120, the shape of conductive layer 111 can be prevented from being distorted (e.g., curved) due to the shape (surface state) of insulation support layer 110 and the like.

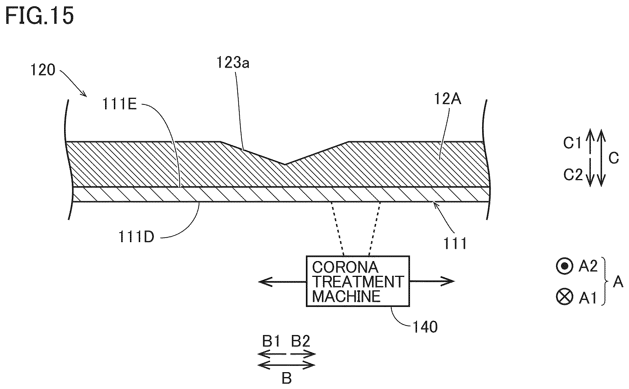

Fig. 15 shows details of step S13 in Fig. 11. In step S13, inner surface 111D of conductive layer 111 is corona-treated by a corona treatment machine 140. Inner surface 111D is surface-treated by corona discharge irradiation from corona treatment machine 140. Inner surface 111D is thus modified. As a result, bonding (adhesion) between inner surface 111D and insulation support layer 110 is improved. The corona treatment in step S13 is part of "joining step" of the present disclosure.

Corona treatment machine 140 may be configured to scan along inner surface 111D. Corona treatment machine 140 is configured to be capable of scanning in the B direction, for example. Corona treatment machine 140 may be capable of scanning in the A direction. Accordingly, entire inner surface 111D can be readily corona-treated. Sheet member 120 may be moved in the B direction, (and the A direction).

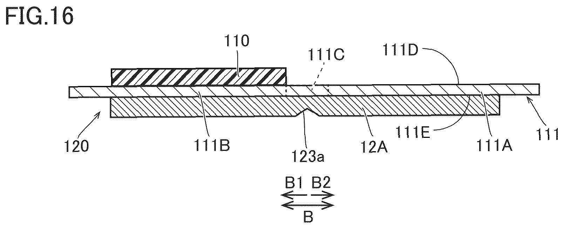

Fig. 16 shows details of step S14 in Fig. 11. In step S14, insulation support layer 110 is disposed on conductive layer 111 (sheet member 120). Specifically, insulation support layer 110 is disposed on inner surface 111D of conductive layer 111 that has been corona-treated in step S13.

Fig. 16 shows connecting portion 111C (a portion where connecting portion 111C is to be formed) with broken lines. Insulation support layer 110 is disposed on one side in the B direction (a B1 direction side in Fig. 16) with respect to connecting portion 111C.

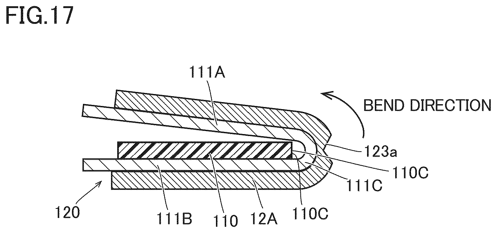

Fig. 17 shows details of step S15 in Fig. 11. In step S15, sheet member 120 is bent so as to sandwich insulation support layer 110 between inner portion 111A and outer portion 111B of conductive layer 111. For example, sheet member 120 may be bent with connecting portion 111C as a fulcrum, to thereby rotate inner portion 111A to a position facing outer portion 111B. At this time, sheet member 120 is bent so that gap Ga is formed between end portion 110C of insulation support layer 110 and connecting portion 111C.

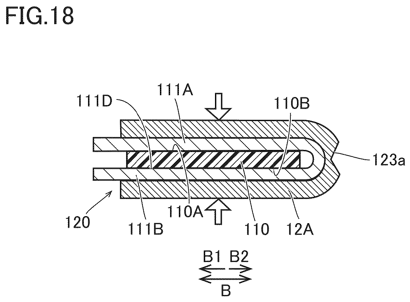

Fig. 18 shows details of step S16 in Fig. 11. In step S16, insulation support layer 110 is pressed by inner portion 111A and outer portion 111B. Accordingly, corona-treated inner surface 111D of conductive layer 111 is brought into intimate contact with each of inner surface 110A and outer surface 110B of insulation support layer 110. Accordingly, inner portion 111A and inner surface 110A are joined to each other, and outer portion 111B and outer surface 110B are joined to each other. As a result, insulation support layer 110 can be stably fixed to conductive layer 111.

A pressure exerted by the pressing is indicated with block arrows in Fig. 18. The pressing pressure in step S16 may be lower than the pressing pressure in step S12. Pressing apparatus 130 (Fig. 14) used in step S12 may be used in step S16 as well.

As described above, in the present embodiment, conductive layer 111 (sheet member 120) is bent to thereby dispose inner portion 111A on inner surface 110A of insulation support layer 110, dispose outer portion 111B on outer surface 110B of insulation support layer 110, and cause connecting portion 111C to face end portion 110C of insulation support layer 110. As a result, first electrode 10A is formed.

That is, insulation support layer 110 can be wrapped by conductive layer 111 (sheet member 120) merely by bending conductive layer 111 (sheet member 120). As a result, first electrode 10A can be readily formed. Accordingly, the manufacturing process of first electrode 10A can be simplified as compared to, for example, when a conductive layer disposed on inner surface 110A and a conductive layer disposed on outer surface 110B are formed separately from each other. Therefore, first electrode 10A having conductive layer 111 provided on both surfaces (110A and 110B) of insulation support layer 110 can be efficiently manufactured.

In addition, since inner portion 111A, outer portion 111B, and connecting portion 111C can be formed merely by bending conductive layer 111, the need to use a vapor deposition apparatus and the like for manufacturing first electrode 10A is eliminated. As a result, the manufacturing apparatus for first electrode 10A can be simplified, and the manufacturing time for first electrode 10A can be reduced by the amount of time required for vapor deposition.

In addition, since inner portion 111A and outer portion 111B can be formed merely by bending conductive layer 111, the manufacturing process can be simplified as compared to when a single electrode foil is divided into one part to be joined to inner portion 111A and the other part to be joined to outer portion 111B.

### <Modifications>

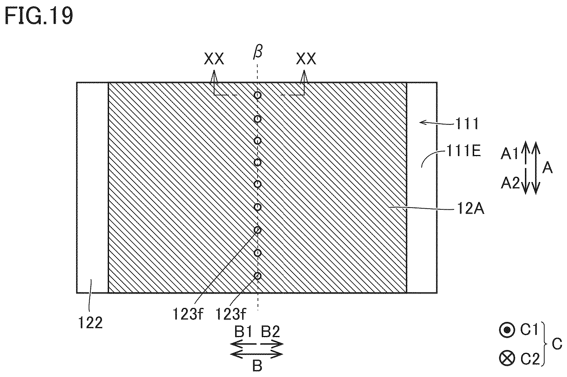

Although notch 123a is formed in first active material layer 12A at the position along bend line β in the example described in the above embodiment, the present disclosure is not limited as such. As shown in Fig. 19, holes 123f may be formed in first active material layer 12A. The plurality of holes 123f may be arranged along bend line β. The plurality of holes 123f may be disposed at regular intervals.

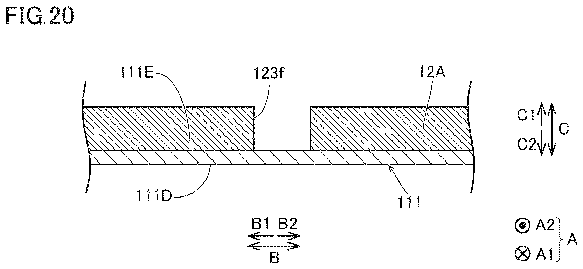

Fig. 20 is a cross-sectional view as seen in the direction of arrows XX-XX in Fig. 19. As shown in Fig. 20, outer surface 111E of conductive layer 111 is exposed at a portion where hole 123f is formed. First active material layer 12A may be formed in hole 123f. In this case, first active material layer 12A in hole 123f has a smaller thickness than first active material layer 12A at other portions.

A long hole extending in the A direction may be formed instead of the plurality of holes 123f.

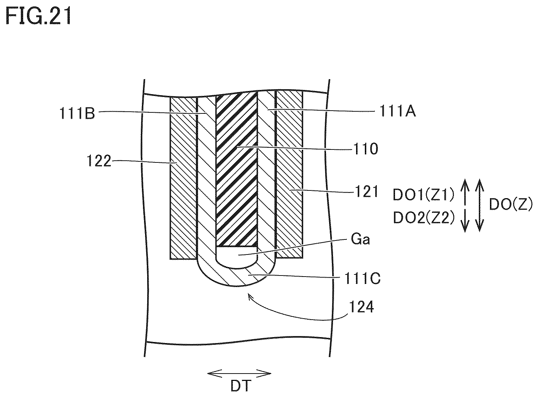

Although connecting portion 111C of conductive layer 111 is coated with first active material layer 12A in the example described in the above embodiment, the present disclosure is not limited as such. As shown in Fig. 21, an uncoated portion 124 not coated with first active material layer 12A may be formed on connecting portion 111C. That is, inner active material portion 121 and outer active material portion 122 may be separated from each other by uncoated portion 124.

Accordingly, connecting portion 111C is exposed to the atmosphere without being covered with first active material layer 12A, so that heat dissipation efficiency of connecting portion 111C can be improved.

Although connecting portion 111C is not coated with first active material layer 12A at all in the example illustrated in Fig. 21, an uncoated portion may be formed only on a part of connecting portion 111C.

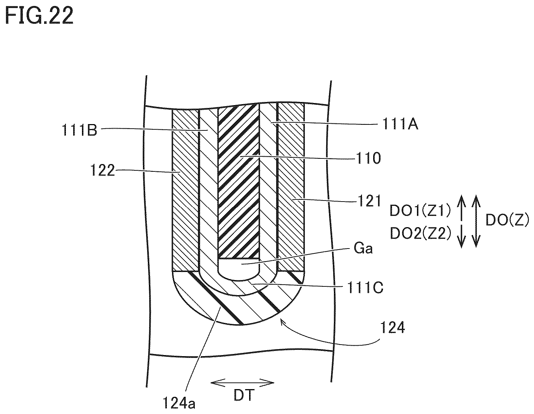

Fig. 22 shows a modification of Fig. 21. As shown in Fig. 22, an insulating layer 124a may be formed on uncoated portion 124. Insulating layer 124a may be provided on entire uncoated portion 124. In this case, insulating layer 124a is in contact with each of inner active material portion 121 and outer active material portion 122. Insulating layer 124a may be formed by solidifying insulating slurry applied to uncoated portion 124.

Accordingly, electrical connection between the positive electrode and the negative electrode due to contact between connecting portion 111C of conductive layer 111 and second electrode 10B (Fig. 9) can be suppressed.

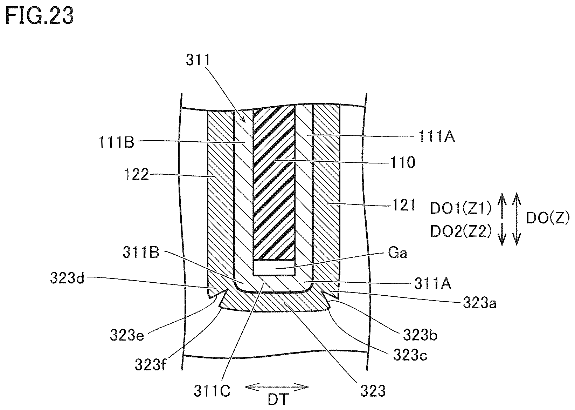

Although connecting portion 111C is bent in the example described in the above embodiment, the present disclosure is not limited as such. In an example shown in Fig. 23, for example, inner portion 111A and outer portion 111B are connected to each other by a connecting portion 311C. Connecting portion 311C linearly extends along thickness direction DT. A connecting active material portion 323 is disposed on connecting portion 311C.

In the example shown in Fig. 23, a corner portion 311A of a conductive layer 311 where inner portion 111A and connecting portion 311C are connected to each other is bent. A corner portion 311B of conductive layer 311 where outer portion 111B and connecting portion 311C are connected to each other is also bent. As shown in Fig. 23, a notch 323b is formed in an active material portion 323a provided on corner portion 311A. Specifically, notch 323b is formed in an outer surface 323c of active material portion 323a opposite to conductive layer 311. Conductive layer 311 is one example of "electrode foil" of the present disclosure.

A notch 323e is formed in an active material portion 323d provided on corner portion 311B. Specifically, notch 323e is formed in an outer surface 323f of active material portion 323d opposite to conductive layer 111. Holes may be formed instead of notches 323b and 323e. Each of active material portion 323a and active material portion 323d is one example of "bent portion coating portion" of the present disclosure. Each of corner portion 311A and corner portion 311B is one example of "bent portion" of the present disclosure. Each of outer surface 323c and outer surface 323f is one example of "active material surface" of the present disclosure.

Although conductive layer 111 is bent with insulation support layer 110 disposed on conductive layer 111 in the example described in the above embodiment, the present disclosure is not limited as such. Insulation support layer 110 may be inserted into a gap between inner portion 111A and outer portion 111B after conductive layer 111 is bent.

Although conductive layer 111 and insulation support layer 110 are joined to each other by corona treatment in the example described in the above embodiment, the present disclosure is not limited as such. Conductive layer 111 and insulation support layer 110 may be joined to each other with an adhesive or by heat treatment (thermal compression bonding).

Although insulation support layer 110 is disposed on conductive layer 111 after the pressing step (S12) in the example described in the above embodiment, the present disclosure is not limited as such. The pressing step may be performed after insulation support layer 110 is disposed on conductive layer 111. In this case, insulation support layer 110 and corona-treated conductive layer 111 may be joined to each other using the pressure exerted in the pressing step.

Although each of inner tab portion 91 and outer tab portion 92 of conductive layer 111 is connected to first coupling member 50A in the example described in the above embodiment, the present disclosure is not limited as such. A different member from conductive layer 111 for connecting conductive layer 111 to first coupling member 50A may be separately provided.

The configurations of the embodiment and modifications described above may be combined with each other.

Although the embodiment of the present disclosure has been described, it should be understood that the embodiment disclosed herein is illustrative and nonrestrictive in every respect. The scope of the present disclosure is defined by the terms of the claims, and is intended to include any modifications within the scope and meaning equivalent to the terms of the claims.

## Claims

1. A method for manufacturing a power storage cell (100) including an electrode sheet (10A), the method comprising:
a forming step of forming a sheet member (120) including an electrode foil (111, 311) and an active material layer (12A), the electrode foil including a first main surface (111E) and a second main surface (111D), the active material layer being formed on the first main surface;
a bending step of bending the sheet member; and
a disposing step of disposing the second main surface of the bent electrode foil on an insulation support layer (110), wherein
the bending step includes bending the sheet member to thereby form, in the electrode foil, a first portion (111A), a second portion (111B) arranged with the first portion in a thickness direction of the insulation support layer, and a connecting portion (111C) that connects the first portion to the second portion, and
assuming that a direction intersecting the thickness direction is defined as an intersecting direction, one of the bending step and the disposing step includes (i) bringing a first surface (110A) of the insulation support layer provided at one end of the insulation support layer in the thickness direction into contact with the first portion, (ii) bringing a second surface (110B) of the insulation support layer opposite to the first surface into contact with the second portion, and (iii) causing an end portion (110C) of the insulation support layer in the intersecting direction to face the connecting portion in the intersecting direction, to thereby form the electrode sheet.

2. The method for manufacturing a power storage cell according to claim 1, wherein
the forming step includes
a coating step of coating the first main surface with an active material layer (12A), and
a pressing step of pressing the active material layer coating the first main surface, and
the disposing step is performed after the pressing step.

3. The method for manufacturing a power storage cell according to claim 1 or 2, further comprising a joining step of joining the first portion to the first surface, and joining the second portion to the second surface.

4. A power storage cell (100) comprising:
a current collector plate (50A); and
an electrode body (10) including an electrode sheet (10A) connected to the current collector plate, wherein
the electrode sheet includes an insulation support layer (110), an electrode foil (111, 311), and an active material layer (12A) formed on the electrode foil,
the active material layer is disposed opposite to the insulation support layer with respect to the electrode foil,
the electrode foil has a first portion (111A) and a second portion (111B) arranged in a thickness direction of the insulation support layer, and a connecting portion (111C) that connects the first portion to the second portion,
the first portion is disposed on a first surface (110A) of the insulation support layer provided at one end of the insulation support layer in the thickness direction,
the second portion is disposed on a second surface (110B) of the insulation support layer opposite to the first surface, and
assuming that a direction intersecting the thickness direction is defined as an intersecting direction, the connecting portion faces an end portion (110C) of the insulation support layer on a first direction side in the intersecting direction with a gap (Ga) therebetween in the intersecting direction.

5. The power storage cell according to claim 4, wherein
the electrode foil includes an electrode surface (111E) provided opposite to the insulation support layer,
the active material layer coats the electrode surface, and has a first active material portion (121) coating the first portion and a second active material portion (122) coating the second portion,
assuming that a side of the intersecting direction opposite to the first direction is defined as a second direction, the first portion has a first protruding portion (91) protruding further toward the second direction than the first active material portion in the intersecting direction, and the second portion has a second protruding portion (92) protruding further toward the second direction than the second active material portion in the intersecting direction, and
at least one of the first protruding portion and the second protruding portion is connected to the current collector plate.

6. The power storage cell according to claim 5, wherein
an uncoated portion (124) not coated with the active material layer is formed on the connecting portion.

7. The power storage cell according to claim 6, wherein
an insulating layer (124a) is formed on the uncoated portion.

8. The power storage cell according to any one of claims 5 to 7, wherein
the active material layer includes a bent portion coating portion (323a, 323d) coating a bent portion (111C) of the electrode foil,
the bent portion coating portion has an active material surface (123b, 323c, 323f) provided opposite to the electrode foil, and
at least one of a hole (123f) and a notch (123a, 323b, 323e) is formed in the active material surface.
